(19) Europäisches Patentamt
European Patent Office
Office européen des brevets

(11) **EP 2 864 150 B1**

(12) **FASCICULE DE BREVET EUROPEEN**

(45) Date de publication et mention
de la délivrance du brevet:
**27.04.2016 Bulletin 2016/17**

(51) Int Cl.:
*H02J 7/00* *(2006.01)*    *B60L 11/18* *(2006.01)*

(21) Numéro de dépôt: **13733384.5**

(22) Date de dépôt: **11.06.2013**

(86) Numéro de dépôt international:
**PCT/FR2013/051344**

(87) Numéro de publication internationale:
**WO 2013/190215 (27.12.2013 Gazette 2013/52)**

(54) **PROCÉDÉ DE CONTRÔLE DE CHARGE D'UNE BATTERIE D'UN VÉHICULE ÉLECTRIQUE DANS UN SYSTÈME DE CHARGE SANS CONTACT**

VERFAHREN ZUR STEUERUNG DES LADENS EINER BATTERIE EINES ELEKTROFAHRZEUGS IN EINEM KONTAKTLOSEN LADESYSTEM

METHOD FOR CONTROLLING THE CHARGING OF A BATTERY OF AN ELECTRIC VEHICLE IN A NON-CONTACT CHARGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2012 FR 1255825**

(43) Date de publication de la demande:
**29.04.2015 Bulletin 2015/18**

(73) Titulaire: **Renault S.A.S.**
**92100 Boulogne-Billancourt (FR)**

(72) Inventeur: **CREGUT, Samuel**
**F-78470 Saint Remy Les Chevreuse (FR)**

(56) Documents cités:
**WO-A1-2010/062198     US-A- 6 160 374**
**US-A1- 2012 002 446**

## Description

L'invention concerne un procédé de contrôle de charge d'une batterie d'un véhicule automobile à traction électrique ou hybride, dans un système de charge sans contact dans lequel un générateur de puissance, du type comportant une source de tension continue suivie d'un onduleur, alimente une charge comprenant un inducteur, connectée en série avec la sortie dudit onduleur, ledit procédé comportant une étape de pilotage dudit onduleur à une fréquence de travail asservie à une fréquence voisine de la fréquence de résonance de la charge en sortie dudit onduleur par transmission de premier et deuxième signaux de commande de modulation par largeur d'impulsion respectivement à des premier et deuxième bras de commutation dudit onduleur.

Les systèmes de charge de batterie de véhicule automobile, dits « sans contact », sont bien connus et comprennent classiquement d'une part, agencée par exemple au sol d'une place de stationnement du véhicule, une borne émettrice d'énergie, comportant un inducteur alimenté par un générateur de puissance à onduleur relié au secteur et, d'autre part, agencée dans le véhicule, une borne réceptrice d'énergie, destinée à être placée au-dessus de l'inducteur, de façon à permettre un transfert d'énergie par couplage inductif entre l'inducteur et la borne réceptrice et à permettre ainsi la recharge de la batterie du véhicule.

L'intérêt de ces systèmes réside dans le confort et l'ergonomie d'utilisation en regard des systèmes de recharge filaire classiques. Toutefois, ces systèmes de charge sans contact ont l'inconvénient de nécessiter un positionnement très précis du véhicule relativement à la borne émettrice d'énergie, de manière à éviter une chute de rendement de la phase de charge de la batterie. Aussi, il a été envisagé dans le document FR2947113, au nom de la demanderesse, une solution consistant à piloter le pont onduleur du générateur de puissance à une fréquence sensiblement égale à la valeur de la fréquence de résonance de la charge constituée par l'inducteur et la borne réceptrice, quel que soit le positionnement du véhicule par rapport à la borne émettrice d'énergie. La résonance augmente le rendement en concentrant le champ magnétique sur la borne réceptrice. On obtient ainsi un rendement optimal et une tolérance maximale au positionnement.

D'autres inconvénients demeurent toutefois. En particulier, les batteries haute tension utilisées pour alimenter les moteurs des véhicules à traction électrique disposent d'une impédance faible. Aussi, dans cette application, lorsqu'on est proche de la fréquence de résonance et que l'on cherche à recharger la batterie, l'impédance vue par le générateur de puissance devient très faible et, en conséquence, les courants appelés sur l'alimentation continue de l'onduleur deviennent très grands sans possibilité de les contrôler. Or, l'alimentation risque de passer quasi instantanément en saturation de courant, ce qui se traduit classiquement par un basculement en mode « défaut » de l'alimentation.

Le document WO2010/062198 décrit également un tel procédé de contrôle de charge d'une batterie d'un véhicule automobile à traction électrique, ayant une régulation en boucle fermée de l'intensité du courant d'alimentation d'un onduleur au primaire.

Dans ce contexte, la présente invention a pour but de proposer un procédé de contrôle de charge d'une batterie de véhicule électrique ou hybride, qui soit capable de réaliser un contrôle fin de la puissance injectée, tout en tenant compte des limitations réelles des alimentations disponibles.

Dans ce but, le procédé de l'invention, par ailleurs conforme à la définition générique qu'en donne le préambule ci-dessus, est essentiellement caractérisé en ce qu'on réalise une régulation en boucle fermée de l'intensité du courant d'alimentation dudit onduleur, une consigne d'intensité du courant d'alimentation étant imposée constante, égale au courant maximal susceptible d'être fourni par ladite source de tension continue dudit onduleur, et on réalise simultanément une régulation en boucle fermée de la puissance transmise par ledit onduleur en agissant sur la commande de la tension d'alimentation dudit onduleur, une consigne de puissance étant établie en fonction d'une information de puissance électrique requise pour la charge de la batterie.

De préférence, le procédé selon l'invention présente encore une ou plusieurs des caractéristiques suivantes :

- on mesure le courant parcourant la charge en sortie dudit onduleur, on compare le courant mesuré à ladite consigne de courant et on adapte les signaux de commande de modulation par largeur d'impulsion dudit onduleur si le courant mesuré diffère de la consigne, de sorte que le courant parcourant la charge en sorte dudit onduleur soit sensiblement égal à la consigne ;

- la régulation en boucle fermée de l'intensité du courant d'alimentation est réalisée en adaptant le rapport cyclique des premier et deuxième signaux de commande dudit onduleur ;

- le deuxième signal de commande dudit onduleur est un signal complémentaire à celui du premier signal de commande dudit onduleur ;

- la régulation en boucle fermée de l'intensité du courant d'alimentation est réalisée en faisant varier la phase entre les premier et deuxième signaux de commande dudit onduleur ;

- l'information de puissance électrique requise pour la charge de la batterie est transmise par un calculateur de supervision de la batterie en fonction d'une stratégie de fin de charge de la batterie ;

- l'asservissement de la fréquence de travail dudit onduleur à une fréquence voisine de la fréquence de résonance de ladite charge en sortie dudit onduleur consiste à réaliser une régulation en boucle fermée de la différence de phase entre la tension d'alimentation ondulée et le courant d'alimentation ondulé délivrés en sortie dudit onduleur, une consigne de différence de phase étant déterminée de manière à ce que la fréquence de travail dudit onduleur est imposée constante à une valeur sensiblement égale à celle de la fréquence de résonance de ladite charge en sortie.

L'invention concerne aussi un calculateur comprenant des moyens matériels et/logiciels pour la mise en oeuvre du procédé selon l'invention.

D'autres caractéristiques et avantages de l'invention ressortiront clairement de la description qui en est faite ci-après, à titre indicatif et nullement limitatif, en référence aux dessins annexés, dans lesquels:

- la Figure 1 est une représentation schématique d'un générateur de puissance à onduleur mis en oeuvre dans un système de charge sans contact pour batterie de véhicule électrique ou hybride ;
- la Figure 2 est un schéma illustrant l'allure de la puissance injectée au niveau de la charge pour un rapport cyclique de 0,5 de la commande PWM des commutateurs de l'onduleur, lorsqu'on est à la résonance;
- la Figure 3 est un schéma illustrant les formes d'onde des premier et deuxième signaux de commande transmis respectivement aux deux bras de commutation de l'onduleur, avec un rapport cyclique égal à 0,3 selon l'exemple représenté, et de la tension résultante appliquée en sortie de l'onduleur ;
- la Figure 4 est un schéma illustrant l'allure de la puissance injectée pour un rapport cyclique de 0,3 de la commande PWM des commutateurs de l'onduleur ;
- la Figure 5 est un schéma synoptique d'un dispositif de contrôle de la charge pour la mise en oeuvre du procédé selon l'invention ; et
- la Figure 6 est un schéma illustrant le système à réguler auquel s'applique le procédé selon l'invention.

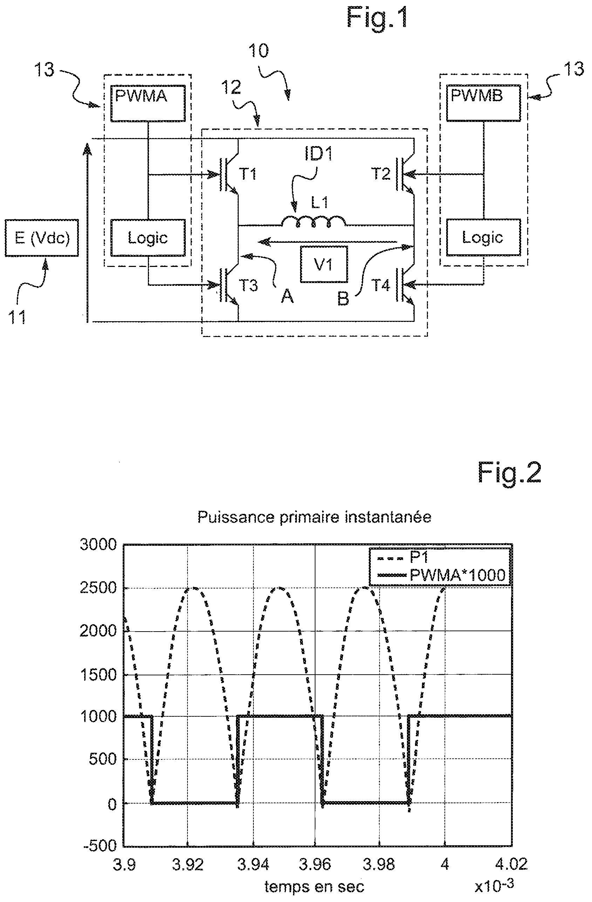

La figure 1 rappelle le schéma classique d'un générateur de puissance à onduleur 10 à commande par modulation de largeur d'impulsion PWM, utilisé pour alimenter une charge montée en série à la sortie. Le générateur de puissance 10 comprend une source de tension continue 11, qui est par exemple réalisée en redressant une tension secteur alternative 230 V et qui fournit une tension d'alimentation continue E régulée et réglable d'amplitude Vdc à un onduleur 12. Cet onduleur 12 présente une structure en pont à quatre commutateurs T1 à T4, tels que des transistors de puissance IGBT (acronyme pour l'expression anglo-saxonne Insulated Gate Bipolar Transistor), les transistors T1-T3 et T2-T4, qui forment les deux bras de commutation A et B de l'onduleur 12, étant connectés en série entre les deux bornes positive et négative de la source de tension continue 11.

La charge, pour le générateur de puissance 10, comprend notamment un inducteur référencé ID1, qui peut être assimilé à une inductance L1 montée en série avec une capacité non représentée, formant alors un circuit résonant. L'inducteur ID1 est raccordé en sortie de l'onduleur 12 entre les deux bras de commutation A et B de l'onduleur 12, de sorte que chacune des bornes de l'inducteur ID1 est reliée aux deux bornes d'alimentation positive et négative de la source de tension continue 11 respectivement par deux transistors. Pour régler la puissance absorbée par le circuit résonant en sortie de l'onduleur 12, on peut agir sur la fréquence de cycles successifs de conduction et de non conduction des transistors, par l'intermédiaire d'un circuit de commande 13 apte à générer des signaux de commande de type PWM à envoyer aux transistors permettant de commander essentiellement la fréquence, dite fréquence de travail de l'onduleur, à laquelle les transistors conduisent et se bloquent.

Ainsi, en commandant l'état passant-bloquant des transistors par une commande PWM appropriée émise par l'intermédiaire du circuit de commande 13, on peut imposer les tensions aux bornes de l'inducteur ID1, de manière à obtenir une tension alternative V1. La tension alternative V1 délivrée par l'onduleur 12 à l'inducteur ID1 permet de générer un champ magnétique, utilisé pour induire un courant dans un enroulement secondaire, non représenté, de la borne réceptrice installée dans le véhicule, connecté à un circuit de redressement et de filtrage, pour la charge de la batterie. Le courant de charge absorbé par l'inducteur découle de la tension qui lui est appliquée. Ce courant et la commande des transistors fixent le courant d'alimentation Idc de l'onduleur 12, c'est-à-dire le courant appelé sur la source de tension continue 11 de l'onduleur 12.

L'onduleur 12 peut être commandé par des signaux de commande présentant un profil PWM de rapport cyclique égal à 0,5 et les électrodes de commande de deux transistors en série sont commandées en opposition. En particulier, un signal de commande PWMA pilote l'ouverture et la fermeture du transistor T1, tandis qu'une logique de commande est conçue pour construire le signal de commande du transistor T3, en inversant le signal PWMA et en assurant un temps mort pour éviter le court-circuit de la source d'alimentation de l'onduleur. De la même manière, s'agissant de la deuxième branche de l'onduleur 12, un signal de commande PWMB, qui est le complément du signal PWMA, pilote l'ouverture et la fermeture du transistor T2, tandis qu'une logique de commande est conçue pour construire le signal de commande du transistor T4.

La puissance transmise à la charge par l'onduleur 12 est fonction notamment de l'amplitude Vdc de la tension continue d'alimentation E de l'onduleur 12, de la tension d'alimentation ondulée V1 appliquée à l'inducteur ID1 et de l'intensité I1 du courant parcourant l'inducteur ID1 en sortie de l'onduleur 12. Pour une amplitude Vdc de la tension d'alimentation E donnée, la puissance transmise est maximale quand la fréquence de commutation est égale à la fréquence de résonance de la charge. La figure 2 illustre les formes d'onde de la commande PWM de l'onduleur pour un rapport cyclique de 0,5 et de la puissance transmise P1, lorsqu'on est à la résonance. La puissance transmise correspond à un sinus redressé double alternance et le courant parcourant la charge a exactement la même allure que la puissance.

Les valeurs moyennes sont alors calculées de la manière suivante :

$$P_{moy} = \frac{2}{\pi} P_{crête} \text{ , respectivement } I_{moy} = \frac{2}{\pi} I_{crête} \text{ ,}$$

$P_{moy}$ correspondant à la puissance ainsi transférée,
$P_{crête}$ correspondant à la valeur maximale (valeur crête) de la puissance,
$I_{crête}$ correspondant à la valeur maximale du courant (valeur crête) et
$I_{moy}$ renvoyant à la valeur moyenne du courant d'alimentation Idc en sortie de la source de tension continue 11 de l'onduleur 12.

Conformément à l'invention, on prévoit de commander l'onduleur 12 avec des signaux de commande PWM non plus complémentés, mais ayant un rapport cyclique différent 0,5, afin d'agir sur le rapport entre les durées de conduction et de non conduction des transistors sur une période de travail, de sorte à n'injecter de la puissance électrique que pendant une fraction de la période.

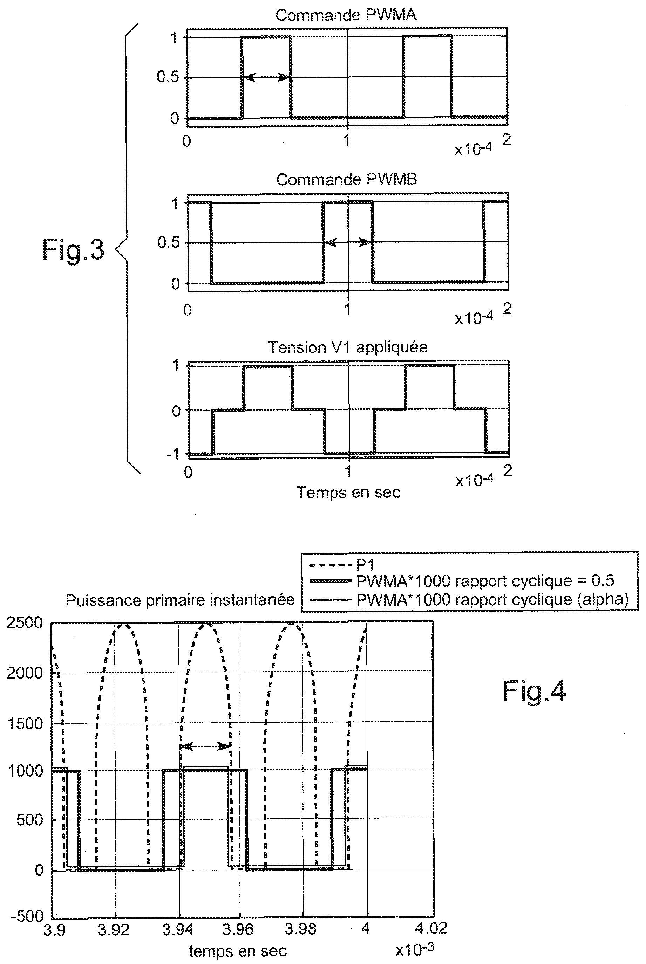

La figure 3 illustre les formes d'onde des premier et deuxième signaux de commande PWMA et PWMB transmis respectivement aux deux bras de commutation de l'onduleur, qui présentent un rapport cyclique inférieur à 0,5 (égal à 0,3 dans l'exemple représenté), et de la tension V1 appliquée en sortie de l'onduleur, qui en résulte. La figure 4 illustre alors les formes d'onde du signal de commande PWMA pour un rapport cyclique de 0,3, superposé à ce même signal de commande pour un rapport cyclique de 0,5, et de la puissance transmise à la charge pour ce rapport cyclique de 0,3.

Aussi, pour une amplitude Vdc donnée de la tension d'alimentation E de l'onduleur 12, si celui-ci est commandé à l'aide de signaux de commande PWM dont le rapport cyclique vaut :

$$Rc = 0.5.\alpha \text{ , avec } 0 < \alpha < 1$$

Alors, la puissance moyenne transmise à la charge, respectivement le courant appelé sur la source de tension continue de l'onduleur, i.e. le courant moyen parcourant la charge en sortie de l'onduleur, vaut cette fois :

$$P_{moy} = \frac{2}{\pi} \sin(\alpha \frac{\pi}{2}).P_{crête} \text{ , respectivement } I_{moy} = \frac{2}{\pi} \sin(\alpha \frac{\pi}{2}).I_{crête}$$

On a donc un courant moyen appelé maîtrisé. L'application d'un rapport cyclique inférieur à 0,5 est donc équivalente à la mise en oeuvre d'un transformateur virtuel, qui diminuerait l'amplitude Vdc réellement appliquée de la tension d'alimentation de l'onduleur et donc, augmenterait le courant d'alimentation Idc du fait de la conservation de la puissance. Il est donc possible, en agissant sur le rapport cyclique des signaux de commande PWM de l'onduleur, de dépasser la limitation de courant de l'alimentation continue de l'onduleur et le rapport cyclique fournit ainsi une variable supplémentaire pour la commande du système en plus de l'amplitude Vdc de la tension d'alimentation E de l'onduleur.

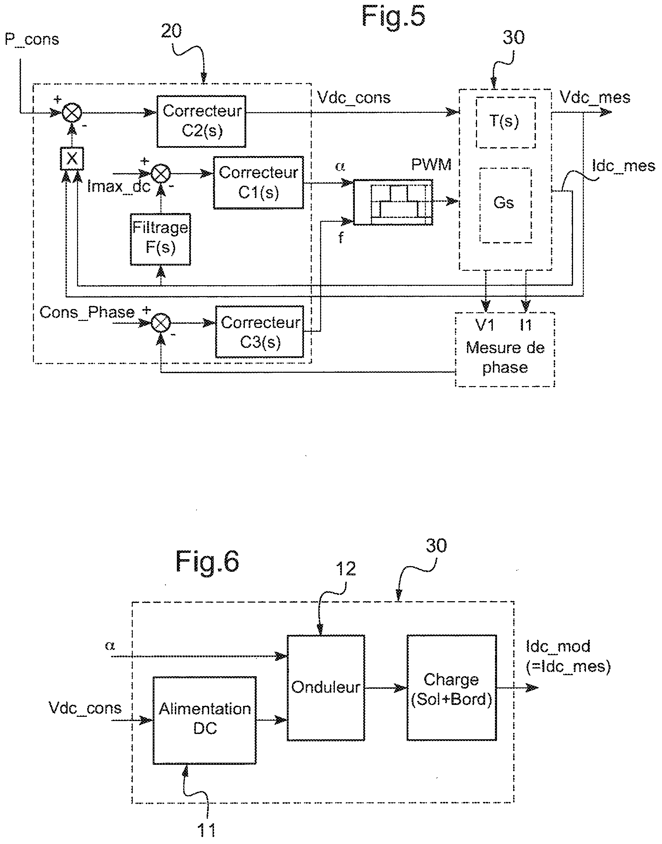

La figure 5 illustre un schéma synoptique d'un dispositif de contrôle de la charge permettant la mise en oeuvre du procédé selon l'invention. Ce dispositif est implémenté sous la forme d'un calculateur 20 présent au niveau de la borne émettrice au sol, disposant des moyens matériels et/ou logiciels pour la mise en oeuvre du procédé de l'invention. Le système 30 à réguler, illustré à la figure 6, est constitué du générateur de puissance 10, comportant l'alimentation continue (source de tension 11) suivie par l'onduleur 12, et de la charge montée en série avec la sortie de l'onduleur 12, pour une partie au sol, constitué par l'inducteur ID1 et pour une autre partie à bord de véhicule, constituée par la borne réceptrice.

Ainsi, selon les principes exposés plus haut, le dispositif de contrôle de la charge comprend une première boucle de régulation, selon une structure en boucle fermée, de l'intensité du courant d'alimentation Idc de l'onduleur 12. Cette régulation est réalisée de préférence en agissant sur le rapport cyclique des signaux de commande PWMA et WMB de l'onduleur 12. A cette fin, l'alimentation continue de l'onduleur 12 est apte à transmettre au calculateur 20 une valeur mesurée Idc_mes de l'intensité du courant d'alimentation, correspondant à la valeur moyenne Idc_mod du courant ondulé parcourant la charge en sortie de l'onduleur, soit Idc_mod = Idc_mes. Une consigne de courant Imax_dc est calculée dans le calculateur 20 à partir de la valeur de courant maximal susceptible d'être fournie par la source de tension continue 11. La boucle de régulation du courant d'alimentation Idc permet ainsi de limiter ce courant à la valeur maximale qui peut être appelée sur la source de tension continue. Cette régulation peut par exemple être réalisée grâce à un correcteur C1 (s). Pour régler la régulation, il est nécessaire de connaître la fonction de transfert G(s) entre le paramètre $\alpha$ permettant de moduler le rapport cyclique Rc des signaux de commande PWMA et PWMB de l'onduleur à une valeur différente de 0,5 et le courant Idc_mes. Soit M, la modulation de gain apporté par un rapport cyclique différent de 0,5. M est obtenu en calculant la valeur moyenne du courant en sortie de l'onduleur, lorsqu'il a l'allure représentée par la forme d'onde illustrée à la figure 2.

$$M = \sin(\alpha \frac{\pi}{2}) \text{ et } Rc = 0,5.\alpha \text{ , avec } 0 < \alpha < 1.$$

On néglige la dynamique entre $\alpha$ et la mesure de courant Idc_mes. La partie dynamique du transfert est imposée en ajoutant un filtre passe-bas F(s) sur la mesure de courant Idc_mes, de la forme :

$$F(s) = \frac{1}{1 + \dfrac{s}{\omega_{c\_BO}}} \text{ ,}$$

avec $\omega_{c\_BO}$ la pulsation de coupure en rad/s et s la variable de Laplace.

On choisit alors un correcteur de type PI de la forme :

$$C1(s) = K_p + \frac{K_i}{s}$$

$K_p$ étant le gain proportionnel et $K_i$ étant le gain intégral.

Ces gains sont réglés facilement dans la mesure où le système à contrôler a un gain connu (défini par M) et une dynamique connue (définie par F(s)). Les méthodes de calcul de $K_p$ et $K_i$ à partir de M et de F(s) sont alors bien connues par l'homme de l'art, puisqu'un calcul analytique est possible

Ainsi, grâce à cette première boucle de régulation, le courant Idc est imposé constant, égal au courant maximum pouvant être généré par l'alimentation continue de l'onduleur. Par « égal » dans cette demande, on entend « sensiblement égal », l'appréciation du courant maximum pouvant être généré par l'alimentation de l'onduleur pouvant varier suivant la méthode d'estimation de cette valeur.

En variante, on régule l'intensité du courant d'alimentation en adaptant le rapport cyclique des signaux de commande PWMA et PWMB de l'onduleur comme expliqué précédemment, mais le signal de commande PWMB est un signal complémentaire à celui du premier signal de commande PWMA.

En variante encore, le pont onduleur 12 est commandé par deux signaux de commande PWMA et PWMB de rapports cycliques égaux à 0,5, mais on fait varier la phase entre les signaux de commande PWMA et PWMB de l'onduleur 12, de sorte que le courant d'alimentation de l'onduleur soit asservi à la consigne Imax_dc.

Par ailleurs, le calculateur au sol 20 est apte à recevoir du calculateur de supervision de la batterie une requête de charge en puissance comprenant une consigne de puissance de charge P_cons correspondant à la puissance requise. La première boucle de régulation du courant appelé sur l'alimentation continue de l'onduleur dont il est fait état plus haut recevant directement en entrée la valeur Imax_dc du courant maximal susceptible d'être fourni par la source de tension continue, il est possible de calculer une consigne de niveau de tension d'alimentation Vdc_cons à appliquer à l'onduleur, à partir de la puissance requise pour la charge de la batterie de la manière suivante :

$$Vdc\_cons = \frac{P\_cons}{\mathrm{Im}ax\_dc}$$

Ce mode de contrôle permet de répondre efficacement à des puissances requises élevées, puisqu'il permet d'atteindre la puissance maximale pouvant être générée par la source de tension continue (Pmax_dc=Vdc_max x Imax_dc). En revanche, il est dans la pratique peu robuste, dans la mesure où il requiert que la boucle de régulation du courant d'alimentation Idc de l'onduleur fonctionne en permanence sans saturation. Or, notamment aux faibles valeurs de puissance, le courant Imax_dc peut ne pas être atteint. Par conséquent, un tel mode de régulation de la puissance n'est pas adapté pour mettre en oeuvre un contrôle fin de la puissance transmise par l'onduleur, en particulier aux faibles valeurs de puissance susceptibles d'être requises dans des stratégies de contrôle de fin de charge de la batterie.

Aussi, le dispositif de contrôle de la charge comprend en outre une deuxième boucle de régulation en boucle fermée du niveau de puissance réellement injecté par l'onduleur, agissant simultanément avec la première boucle de régulation du courant d'alimentation Idc. La consigne de puissance P_cons provient du calculateur de supervision de la batterie et cette consigne est par exemple déterminée en fonction du niveau de puissance requis dans le cadre de l'application d'une stratégie de fin de charge de la batterie. Cette consigne est ensuite comparée à la puissance réellement transmise par l'onduleur, qui est calculée à partir des valeurs renvoyées au calculateur 20 par l'alimentation continue de l'onduleur, concernant la tension d'alimentation mesurée Vdc_mes et le courant d'alimentation mesuré Idc_mes.

La régulation peut par exemple être réalisée grâce à un correcteur C2(s), permettant d'assurer la régulation fine de la puissance transmise. Pour régler la régulation, on synthétise un deuxième correcteur C2(s) de type PI et cette synthèse repose sur la connaissance de la fonction de transfert T(s) entre la mesure de la tension d'alimentation de l'onduleur Vdc_mes et sa commande Vdc_cons.

Aussi, le premier correcteur C1(s) permet d'assurer le contrôle du courant d'alimentation de l'onduleur à la valeur maximale susceptible d'être fournie par la source de tension continue du générateur de puissance à onduleur, tandis que le deuxième correcteur C2(s) permet d'assurer une régulation fine de la puissance injectée par le générateur de puissance à onduleur.

Enfin, le dispositif de contrôle de la charge comprend une troisième boucle de régulation selon une structure en boucle fermée, agissant simultanément avec les deux boucles de régulation précédemment décrites, qui vise à réguler la fréquence de travail f de l'onduleur, de manière à asservir en fréquence la tension d'alimentation ondulée V1 délivrée par l'onduleur 12 à une fréquence voisine de la fréquence de résonance de la charge en sortie de l'onduleur. A cet effet, on synthétise un troisième correcteur C3(s) de type PI et on choisit comme paramètre de réglage de cette troisième boucle de régulation la différence de phase entre la tension d'alimentation ondulée V1 et le courant d'alimentation ondulé I1 en sortie de l'onduleur 12 en fonction d'une consigne de différence de phase Cons_Phase déterminé par le calculateur 20.

Aussi, le procédé de contrôle de l'invention permet de réaliser simultanément 3 fonctions de régulation par l'intermédiaire de 3 correcteurs, qui permettent respectivement de contrôler le courant d'alimentation, d'injecter exactement la puissance souhaitée, y compris à des niveaux moyens et faibles, et de rester à la résonance du système.

## Revendications

**1.** Procédé de contrôle de charge d'une batterie d'un véhicule automobile à traction électrique ou hybride, dans un système de charge sans contact dans lequel un générateur de puissance (10), du type comportant une source de tension continue (11) suivie d'un onduleur (12), alimente une charge comprenant un inducteur (ID1), connectée en série avec la sortie dudit onduleur (12), ledit procédé comportant une étape de pilotage dudit onduleur (12) à une fréquence de travail (f) asservie à une fréquence voisine de la fréquence de résonance de la charge en sortie dudit onduleur (12) par transmission de premier (PWMA) et deuxième (PWMB) signaux de commande de modulation par largeur d'impulsion respectivement à des premier (A) et deuxième (B) bras de commutation dudit onduleur (12), ledit procédé étant **caractérisé en ce que** :

- on réalise une régulation en boucle fermée de l'intensité du courant d'alimentation dudit onduleur (12), une consigne d'intensité du courant d'alimentation (Imax_dc) étant imposée constante, égale au courant maximal susceptible d'être fourni par ladite source de tension continue (11) dudit onduleur (12), et
- on réalise simultanément une régulation en boucle fermée de la puissance transmise par ledit onduleur (12) en agissant sur la commande de la tension d'alimentation (Vdc_cons) dudit onduleur (12), une consigne de puissance (P_cons) étant établie en fonction d'une information de puissance électrique requise pour la charge de la batterie.

**2.** Procédé selon la revendication 1, **caractérisé en ce qu'**on mesure le courant d'alimentation (Idc_mes) parcourant la charge en sortie dudit onduleur (12), on compare le courant d'alimentation (idc_mes) mesuré à ladite consigne de courant (Imax_dc) et on adapte les signaux de commande (PWMA, PWMB) de modulation par largeur d'impulsion dudit onduleur (12) si le courant (Idc_mes) mesuré diffère de la consigne (Imax_dc), de sorte que le courant parcourant la charge en sorte dudit onduleur soit sensiblement égal à la consigne (Imax_dc).

**3.** Procédé selon la revendication 1 ou 2, **caractérisé en ce que** la régulation en boucle fermée de l'intensité du courant d'alimentation est réalisée en adaptant le rapport cyclique des premier (PWMA) et deuxième (PWMB) signaux de commande dudit onduleur (12).

**4.** Procédé selon la revendication 3, **caractérisé en ce que** le deuxième signal de commande (PWMB) dudit onduleur (12) est un signal complémentaire à celui du premier signal de commande (PWMA) dudit onduleur.

**5.** Procédé selon la revendication 1 ou 2, **caractérisé en ce que** la régulation en boucle fermée de l'intensité du courant d'alimentation est réalisée en faisant varier la phase entre les premier (PWMA) et deuxième (PWMB) signaux de commande dudit onduleur (12).

**6.** Procédé selon l'une quelconque des revendications précédentes, **caractérisé en ce que** ladite consigne de puissance (P_cons) est comparée à la puissance réellement transmise par l'onduleur, ladite puissance réellement transmise étant calculée à partir des valeurs mesurées de la tension d'alimentation (Vdc_mes) et du courant d'alimentation (Idc_mes).

**7.** Procédé selon l'une quelconque des revendications précédentes, **caractérisé en ce que** l'information de puissance électrique requise pour la charge de la batterie est transmise par un calculateur de supervision de la batterie en fonction d'une stratégie de fin de charge de la batterie.

**8.** Procédé selon l'une quelconque des revendications précédentes, **caractérisé en ce que** l'asservissement de la fréquence de travail (f) dudit onduleur (12) à une fréquence voisine de la fréquence de résonance de ladite charge en sortie dudit onduleur (12) consiste à réaliser une régulation en boucle fermée de la différence de phase entre la tension d'alimentation ondulée (V1) et le courant d'alimentation ondulé (11) délivrés en sortie dudit onduleur (12), une consigne de différence de phase (Cons_phase) étant déterminée de manière à ce que la fréquence de travail dudit onduleur (12) est imposée constante à une valeur sensiblement égale à celle de la fréquence de résonance de ladite charge en sortie.

**9.** Calculateur (20), **caractérisé en ce qu'**il comprend des moyens matériels et/ logiciels pour la mise en oeuvre du procédé selon l'une quelconque des revendications précédentes.

**Patentansprüche**

**1.** Verfahren zur Steuerung des Ladens einer Batterie eines elektrischen oder hybriden Kraftfahrzeugs in einem kontaktlosen Ladesystem, in dem ein Leistungsgenerator (10) des Typs, der eine Gleichspannungsquelle (11) umfasst, auf die ein Wechselrichter (12) folgt, eine Last versorgt, die einen Induktor (ID1) umfasst, die in Serie mit dem Ausgang des Wechselrichters (12) geschaltet ist, wobei das Verfahren einen Steuerschritt des Wechselrichters (12) auf eine Arbeitsfrequenz (f) umfasst, die mit einer Frequenz nahe der Resonanzfrequenz der Last am Ausgang des Wechselrichters (12) durch Übertragung eines ersten (PWMA) und eines zweiten (PWMB) Impulsbreitenmodulations-Steuersignals jeweils zu einem ersten (A) und einem zweiten (B) Umschaltarm des Wechselrichters (12) gesteuert wird, Verfahren **dadurch gekennzeichnet, dass**:

- man eine Regelung in geschlossener Schleife der Stärke des Versorgungsstroms des Wechselrichters (12) ausführt, wobei ein Stärkensollwert des Versorgungsstroms (Imax_dc) gleich dem maximalen Strom, der von der Gleichspannungsquelle (11) des Wechselrichters (12) geliefert werden kann, konstant auferlegt wird, und
- man gleichzeitig eine Regelung in geschlossener Schleife der von dem Wechselrichter (12) übertragenen Leistung ausführt, indem auf die Steuerung der Versorgungsspannung (Vdc_cons) des Wechselrichters (12) eingewirkt wird, wobei ein Leistungssollwert (P_cons) in Abhängigkeit von einer Information der elektrischen Leistung, die für das Laden der Batterie erforderlich ist, erstellt wird.

**2.** Verfahren nach Anspruch 1, **dadurch gekennzeichnet, dass** man den Versorgungsstrom (Idc_mes), der die Last am Ausgang des Wechselrichters (12) durchläuft, misst, den gemessenen Versorgungsstrom (Idc_mes) mit dem Stromsollwert (Imax_dc) vergleicht und die Impulsbreitenmodulations-Steuersignale (PWMA, PWMB) des Wechselrichters (12) anpasst, falls der gemessene Strom (Idc_mes) von dem Sollwert (Imax_dc) unterschiedlich ist, so dass der Strom, der die Last am Ausgang des Wechselrichters durchläuft, im Wesentlichen gleich dem Sollwert (Imax_dc) ist.

3. Verfahren nach Anspruch 1 oder 2, **dadurch gekennzeichnet, dass** die Regelung in geschlossener Schleife der Stärke des Versorgungsstroms ausgeführt wird, indem das zyklische Verhältnis des ersten (PWMA) und zweiten (PWMB) Steuersignals des Wechselrichters (12) angepasst wird.

4. Verfahren nach Anspruch 3, **dadurch gekennzeichnet, dass** das zweite Steuersignal (PWMB) des Wechselrichters (12) ein Signal ist, das zu dem des ersten Steuersignals (PWMA) des Wechselrichters komplementär ist.

5. Verfahren nach Anspruch 1 oder 2, **dadurch gekennzeichnet, dass** die Regelung in geschlossener Schleife der Stärke des Versorgungsstroms ausgeführt wird, indem man die Phase zwischen dem ersten (PWMA) und dem zweiten (PWMB) Steuersignal des Wechselrichters (12) variieren lässt.

6. Verfahren nach einem der vorhergehenden Ansprüche, **dadurch gekennzeichnet, dass** der Leistungssollwert (P_cons) mit der tatsächlich von dem Wechselrichter übertragenen Leistung verglichen wird, wobei die tatsächlich übertragene Leistung ausgehend von gemessenen Werten der Versorgungsspannung (Vdc_mes) und des Versorgungsstroms (Idc_mes) berechnet wird.

7. Verfahren nach einem der vorhergehenden Ansprüche, **dadurch gekennzeichnet, dass** die Information der elektrischen Leistung, die für das Laden der Batterie erforderlich ist, von einem Überwachungsrechner der Batterie in Abhängigkeit von einer Strategie des Aufladeendes der Batterie übertragen wird.

8. Verfahren nach einem der vorhergehenden Ansprüche, **dadurch gekennzeichnet, dass** das Steuern der Arbeitsfrequenz (f) des Wechselrichters (12) auf eine Frequenz nahe der Resonanzfrequenz der Last am Ausgang des Wechselrichters (12) darin besteht, eine Regelung in geschlossener Schleife des Phasenunterschieds zwischen der wechselgerichteten Versorgungsspannung (V1) und dem wechselgerichteten Versorgungsstrom (I1), die am Ausgang des Wechselrichters (12) geliefert werden, auszuführen, wobei ein Phasensollunterschied (Cons_phase) derart bestimmt wird, dass die Arbeitsfrequenz des Wechselrichters (12) auf einen Wert im Wesentlichen gleich dem der Resonanzfrequenz der Last am Ausgang konstant auferlegt wird.

9. Rechner (20), **dadurch gekennzeichnet, dass** er Hardware- und Softwaremittel zum Umsetzen des Verfahrens nach einem der vorhergehenden Ansprüche umfasst.

**Claims**

1. Method for controlling the charging of a battery of an electric or hybrid drive motor vehicle in a non-contact charging system, wherein a power generator (10) of the type comprising a DC voltage source (11) followed by an inverter (12) feeds a load comprising an inductor (ID1), said load being connected in series with the output of said inverter (12), said method comprising a step of controlling said inverter (12) at a working frequency (f) slaved to a frequency close to the load resonance frequency at the output of said inverter (12) by transmission of first pulsewidth modulation command signal (PWMA) and a second pulsewidth modulation command signal (PWMB) to a first switching arm (A) and a second switching arm (B) respectively of said inverter (12), said method being **characterized in that**:

- a closed-loop regulation of the intensity of the supply current of said inverter (12) is performed, a supply current intensity set value (Imax_dc) being fixed so as to be constant, equal to the maximum current able to be provided by said DC voltage source (11) of said inverter (12), and
- a closed-loop regulation of the power transmitted by said inverter (12) is performed simultaneously by acting on the control of the supply voltage (Vdc_cons) of said inverter (12), a power set value (P_cons) being established according to a piece of electrical power information required for the charging of the battery.

2. Method according to Claim 1, **characterized in that** the supply current (Idc_mes) passing through the load at the output of said inverter (12) is measured, the supply current measured (Idc_mes) is compared to said current set value (Imax_dc), and the pulsewidth modulation command signals (PWMA, PWMB) of said inverter (12) are adapted if the measured current (Idc_mes) differs from the set value (Imax_dc), such that the current passing through the load at the output of said inverter is substantially equal to the set value (Imax_dc).

3. Method according to Claim 1 or 2, **characterized in that** the closed-loop regulation of the intensity of the supply current is performed by adapting the duty cycle of the first command signal (PWMA) and second command signal (PWMB) of said inverter (12).

4. Method according to Claim 3, **characterized in that** the second command signal (PWMB) of said inverter (12) is a signal complementary to that of the first command signal (PWMA) of said inverter.

5. Method according to Claim 1 or 2, **characterized in that** the closed-loop regulation of the intensity of the supply current is performed by varying the phase between the first command signal (PWMA) and the second command signal (PWMB) of said inverter (12).

6. Method according to any one of the preceding claims, **characterized in that** said power set value (P_cons) is compared to the power actually transmitted by the inverter, said power actually transmitted being calculated on the basis of the measured values of the supply voltage (Vdc_mes) and of the supply current (Idc_mes).

7. Method according to any one of the preceding claims, **characterized in that** the piece of electrical power information required for the charging of the battery is transmitted by a battery supervision computer according to a battery charging completion strategy.

8. Method according to any one of the preceding claims, **characterized in that** the enslavement of the working frequency (f) of said inverter (12) to a frequency close to the resonance frequency of said load at the output of said inverter (12) consists of performing a closed-loop regulation of the phase difference between the ripple supply voltage (V1) and the ripple supply current (I1) delivered at the output of said inverter (12), a phase difference set value (Cons_phase) being determined in such a way that the working frequency of said inverter (12) is fixed so as to be constant at a value substantially equal to that of the resonance frequency of said load at the output.

9. Computer (20), **characterized in that** it comprises hardware and/or software means for carrying out the method according to any one of the preceding claims.

## Fig.1

## Fig.2

Puissance primaire instantanée

temps en sec

Fig.3

Commande PWMA

Commande PWMB

Tension V1 appliquée

Temps en sec

Puissance primaire instantanée

- - - - - P1
PWMA*1000 rapport cyclique = 0.5
PWMA*1000 rapport cyclique (alpha)

Fig.4

temps en sec

## Fig.5

## Fig.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2947113
- WO 2010062198 A